# EUROPÄISCHE PATENTSCHRIFT

(11) **EP 3 085 027 B1**
(45) Veröffentlichungstag und Bekanntmachung des Hinweises auf die Patenterteilung: **31.01.2018**
(21) Anmeldenummer: 14821087.5
(22) Anmeldetag: 10.12.2014
(51) Int. Cl.: H04L 12/40, H04L 1/00, H04L 7/00, H04L 12/819, H04L 29/08, H04B 17/30

(54) **KOMMUNIKATIONSKNOTEN FÜR EIN PAKETVERMITTELTES DATENNETZWERK UND VERFAHREN ZU DESSEN BETRIEB**
COMMUNICATION NODE FOR A PACKET-SWITCHED DATA NETWORK, AND A METHOD FOR OPERATING SAME
N UD DE COMMUNICATION POUR RÉSEAU DE DONNÉES PAR PAQUETS ET PROCÉDÉ POUR LE FAIRE FONCTIONNER

(30) Priorität: 20.12.2013 DE 102013226977
(43) Veröffentlichungstag der Anmeldung: 26.10.2016
(73) Patentinhaber: Cetitec GmbH, 75179 Pforzheim (DE)
(72) Erfinder: KOLMANIC, Bojan, 75196 Remchingen-Singen (DE)
(74) Vertreter: Fink Numrich
(86) Internationale Anmeldenummer: PCT/EP2014/077166
(87) Internationale Veröffentlichungsnummer: WO 2015/091137

(56) Entgegenhaltungen:
- WO-A1-2013/126630
- DE-B3-102005 037 376
- JOHAS TEENER MICHAEL D ET AL: "Heterogeneous Networks for Audio and Video: Using IEEE 802.1 Audio Video Bridging", PROCEEDINGS OF THE IEEE, IEEE. NEW YORK, US, Bd. 101, Nr. 11, 1. November 2013 (2013-11-01), Seiten 2339-2354, XP011529863, ISSN: 0018-9219, DOI: 10.1109/JPROC.2013.2275160 [gefunden am 2013-10-16]

## Beschreibung

Die Erfindung betrifft einen Kommunikationsknoten für ein paketvermitteltes Datennetzwerk, der einen integrierten Schaltkreis mit einem System von elektronischen Komponenten zum Senden und/oder zum Empfangen von Audio- und/oder Videodaten, insbesondere eines Audio- und/oder Videodatenstroms, umfasst. Die Erfindung betrifft ferner ein Verfahren zum Betreiben eines solchen Kommunikationsknotens.

Ein integrierter Schaltkreis mit einem System von elektronischen Komponenten ist unter dem Begriff System-on-a-Chip (SoC) bekannt. Bei einem solchen System sind alle oder große Teile der Funktionen des Systems auf einem einzigen Chip, also einem integrierten Schaltkreis, angeordnet. Unter einem System ist hierbei eine Kombination unterschiedlicher Elemente, wie logischer Schaltungen, Taktung, und dergleichen, zu verstehen, die zusammen eine bestimmte Funktionalität bereitstellen. Eingesetzt werden solche integrierte Schaltkreise beispielsweise in eingebetteten Systemen (englisch: Embedded Systems). Ein mögliches Anwendungsgebiet von SoCs ist beispielsweise das Senden und/oder das Empfangen von Audio- und/oder Videodaten (sog. Streaming).

Unter dem Begriff "Audio Video Bridge" (AVB) sind eine Reihe von Standards gemäß IEEE 802.1 für synchronisiertes und priorisiertes Streamen von Audio- und Videodaten über Netzwerke zusammengefasst. AVB setzt sich unter anderem aus den Standards IEEE 802.1AS (*Timing and Synchronisation for Time-Sensitive Applications* (gPTP)) und IEEE 802.1Qav (*Forwarding and queuing for time-sensitive streams*) zusammen. Daneben kommt im Umfeld von AVB der Standard IEEE 1722 (*Transport Protokoll for Time-Sensitive Applications* (*Audio Video Transport Protocol,* AVTP) zur Anwendung. AVB ermöglicht es, ein paketvermitteltes Datennetzwerk, wie zum Beispiel Ethernet-basierte Netzwerke, für die Duplexübertragung zahlreicher Audio- und Videokanäle zu nutzen. Eine Zeitsynchronisation zwischen an das Datennetzwerk angeschlossenen Kommunikationsknoten erfolgt dabei über Zeitinformationen. Dadurch, dass AVB existierende Standard Layer-2 MACs (*Media Access Controller*) und Bridges (deutsch: Brücken) nutzt, kann eine Rückwärtskompatibilität zwischen Kommunikationsknoten, die AVB nutzen, und Kommunikationsknoten, die AVB nicht nutzen, ermöglicht werden, wodurch diese über herkömmliche gemäß dem Standard IEEE 802 ausgebildete Rahmen kommunizieren können.

Um einem Kommunikationsknoten die Nutzung von AVB zu ermöglichen, sind verschiedene Änderungen an Hardware und Software des Kommunikationsknoten erforderlich. Beispielsweise erfordert der Standard IEEE 802.1AS einen genaueren Zeitstempel von eingehenden oder ausgesendeten Datenpaketen. Das Zeitstempeln wird typischerweise innerhalb einer hierzu modifizierten Medienzugriffssteuerungskomponente (zum Beispiel Ethernet MAC) des integrierten Schaltkreises (SoC) realisiert. Hierdurch wird sichergestellt, dass der Zeitpunkt des Aussendens des Datenpakets möglichst nah an dem Zeitpunkt des Zeitstempelns ist. Aus diesem Grund wird diese Funktionalität in der Regel in Hardware realisiert (Hardware Assisted Time Stamping). Die Erzeugung von Synchronisationsnachrichten sowie von Nachrichten bezüglich Laufzeitverzögerungen und dergleichen werden demgegenüber in der Medienzugriffssteuerungskomponente als Software vorgesehen.

Eine im Standard IEEE 802.1Qav beschriebene Warteschlangenverwaltungseinheit ist in der Regel als FIFO (first in - first out) realisiert. Hierdurch werden Datenpakete nach bestimmten Kriterien an eine Kommunikationsleitung des Datennetzwerks, an die der Kommunikationsknoten angeschlossen ist, ausgegeben. Dies erfordert jedoch eine gewisse Rechenleistung, um die Echtzeitanforderungen von AVB erfüllen zu können.

Die WO 2013/126630 A1 offenbart einen Kommunikationsknoten für ein paketvermitteltes Datennetzwerk, der einen integrierten Schaltkreis mit einem System von elektronischen Komponenten zum Senden und/oder zum Empfangen von Audio- und/oder Videodaten umfasst. Als Komponenten des Systems sind eine Medienzugriffssteuerungskomponente (MAC) zur Implementierung einer Medienzugriffssteuerung und eine physikalische Schnittstelle (PHY) mit Sende- und Empfangsmitteln, über die der Kommunikationsknoten an eine Kommunikationsleitung des Datennetzwerks anschließbar ist, vorgesehen. Die Medienzugriffssteuerungskomponente ist mit der physikalischen Schnittstelle zum Austausch von Daten verbunden. Das System umfasst weiter ein Zeitmanagementmodul.

Die DE 10 2005 037 376 B3 offenbart einen Ethernet-Controller, wobei eine Vorrichtung zum Zeitstempeln von Paketen zwischen einer Medienzugriffsteuerungsschicht (MAC-Layer) und einer physikalischen Schicht (PHY-Layer) angeordnet ist.

Die Publikation JOHAS TEENER MICHAEL D ET AL: "Heterogeneous Networks for Audio and Video: Using IEEE 802.1 Audio Video Bridging", PROCEEDINGS OF THE IEEE, IEEE, NEW YORK, US, Bd. 101, Nr. 11, 1. November 2013, Seiten 2339-2354 offenbart einen Protokollstack für einen Kommunikationsknoten.

Es ist Aufgabe der vorliegenden Erfindung, einen Kommunikationsknoten für ein paketvermitteltes Datennetzwerk bereitzustellen, welcher uneingeschränkt für die Nutzung von AVB ausgebildet ist und gleichzeitig eine verringerte Rechenlast der Medienzugriffssteuerungskomponente bei Erfüllung aller Echtzeitanforderungen ermöglicht. Dabei soll der Kommunikationsknoten rückwärtskompatibel sein und auch in der Lage, mit anderen Kommunikationsknoten kommunizieren zu können, die AVB nicht beherrschen. Es ist weiter Aufgabe der Erfindung, ein Verfahren zum Betreiben eines solchen Kommunikationsknotens anzugeben.

Diese Aufgabe wird gelöst durch einen Kommunikationsknoten gemäß den Merkmalen des Anspruches 1 sowie ein Verfahren gemäß den Merkmalen des Anspruches 13. Vorteilhafte Ausgestaltungen ergeben sich aus den abhängigen Ansprüchen.

Zur Lösung dieser Aufgabe wird ein Kommunikationsknoten für ein paketvermitteltes Datennetzwerk vorgeschlagen, der einen integrierten Schaltkreis mit einem System von elektronischen Komponenten zum Senden und/oder zum Empfangen von Audio- und/oder Videodaten, umfasst. Das paketvermittelte Datennetzwerk ist insbesondere das Ethernet bzw. basiert auf Ethernet.

Insbesondere umfasst der integrierte Schaltkreis ein System von elektronischen Komponenten zum Senden und/oder zum Empfangen eines Audio- und/oder Videodatenstroms (sog. Stream). Ein solcher integrierter Schaltkreis mit einem System von elektronischen Komponenten liegt z.B. in der Form eines SoC vor. Als Komponenten des Systems sind zumindest eine Medienzugriffssteuerungskomponente zur Implementierung einer Medienzugriffssteuerung und eine physikalische Schnittstelle mit Sende- und Empfangsmitteln, über die der Kommunikationsknoten an eine Kommunikationsleitung des Datennetzwerks anschließbar ist, vorgesehen. Die Medienzugriffssteuerungskomponente ist beispielsweise eine Ethernet-MAC. Die physikalische Schnittstelle ist beispielsweise in Gestalt einer Ethernet-PHY ausgebildet. Dies ist ein spezieller integrierter Schaltkreis oder eine funktionelle Gruppe eines Schaltkreises, der für die Kodierung und Dekodierung von Daten zwischen einem rein digitalen System und einem modulierten analogen System zuständig ist.

Die Medienzugriffssteuerungskomponente ist über eine interne erste Schnittstelle mit der physikalischen Schnittstelle zum Austausch von Daten verbunden. Das System umfasst weiter eine Echtzeit-Uhrensynchronisationseinheit zur Synchronisation einer Zeitinformation mit weiteren Kommunikationsknoten des Datennetzwerks und eine Warteschlangenverwaltungseinheit. Erfindungsgemäß sind die Echtzeit-Uhrensynchronisationseinheit und die Warteschlangenverwaltungseinheit vollständig in der physikalischen Schnittstelle angeordnet.

Bei dem vorgeschlagenen Kommunikationsknoten ist der integrierte Schaltkreis von sämtlichen durch AVB verursachten Echtzeit-Anforderungen entlastet. Die AVB betreffende Funktionalität ist stattdessen in der physikalischen Schnittstelle angeordnet. Dies ermöglicht eine Rückwärtskompatibilität sowie eine kostengünstigere Realisierung eines AVB-Kommunikationsknotens, da das Design eines AVB-konformen integrierten Schaltkreises wesentlich aufwändiger ist, als die in der Regel separat in dem Kommunikationsknoten angeordnete physikalische Schnittstelle mit den erforderlichen Komponenten und Funktionalitäten zu versehen. Durch den Austausch einer herkömmlichen physikalischen Schnittstelle mit einer erfindungsgemäß vorgeschlagenen Schnittstelle kann ein Kommunikationsknoten AVB-kompatibel gemacht werden.

Dadurch, dass die physikalische Schnittstelle sämtliche AVB betreffende Aufgaben in Echtzeit abarbeitet, reduziert sich die durch AVB verursachte Interrupt-Last des integrierten Schaltkreises beträchtlich. Als weiterer Vorteil steht die zwischen der physikalischen Schnittstelle und der Medienzugriffssteuerungskomponente vorhandene interne erste Schnittstelle ausschließlich für die Übertragung von Datenpaketen (mit Nutzlast) zur Verfügung. Dies bedeutet, die über die interne, erste Schnittstelle zur Verfügung stehende Bandbreite ist im Vergleich zu herkömmlichen Kommunikationsknoten, bei dem AVB-Aufgaben durch die Medienzugriffssteuerungskomponente übernommen werden, erhöht.

Gemäß einer zweckmäßigen Ausgestaltung weist die Medienzugriffssteuerungskomponente keine Funktionalität der Echtzeit-Uhrensynchronisationseinheit und der Warteschlangenverwaltungseinheit auf. Hierdurch können durch AVB verursachte Interrupt-Anfragen an den integrierten Schaltkreis vermieden werden. Darüber hinaus wird die Rückwärtskompatibilität des Kommunikationsknotens verbessert.

Gemäß einer weiteren zweckmäßigen Ausgestaltung basiert die Echtzeit-Uhrensynchronisationseinheit in der physikalischen Schnittstelle auf dem Standard IEEE 802.1AS und hat dessen vollständige Funktionalität implementiert.

Gemäß einer weiteren zweckmäßigen Ausgestaltung ist ein erster Teil der Funktionalität der Echtzeit-Uhrensynchronisationseinheit in der physikalischen Schnittstelle als Hardware realisiert, durch die eine, insbesondere eigenständige, Zeitsynchronisation mit weiteren Kommunikationsknoten des Datennetzwerks durchführbar ist. Die als Hardware realisierte Funktionalität der Echtzeit-Uhrensynchronisationseinheit betrifft insbesondere das Versehen von ein- und ausgehenden Datenpaketen mit Zeitstempeln entsprechend den Vorgaben von AVB. Unter einer eigenständigen Zeitsynchronisation ist zu verstehen, dass keine Kommunikation zwischen der physikalischen Schnittstelle und der Medienzugriffssteuerungskomponente zum Zwecke der Erfüllung der vorgesehenen Funktionalität der Hardware erfolgt.

In einer weiteren zweckmäßigen Ausgestaltung ist ein zweiter Teil der Funktionalität der Echtzeit-Uhrensynchronisationseinheit in der physikalischen Schnittstelle in Software realisiert zur Implementierung einer Messung von Laufzeitverzögerungen und/oder der Übertragung von Informationen für eine Zeitsynchronisation und/oder der Auswahl eines der Kommunikationsknoten des Datennetzwerks als Master-Knoten. Diese Information wird von den an das Datennetzwerk angeschlossenen Kommunikationsknoten für die Zeitsynchronisation verwendet.

Gemäß einer weiteren zweckmäßigen Ausgestaltung umfasst die Echtzeit-Uhrensynchronisationseinheit in der physikalischen Schnittstelle zumindest ein Register, in das im Betrieb des Kommunikationsknotens eine oder mehrere durch die Echtzeit-Uhrensynchronisationseinheit ermittelte Zeitinformationen eingespeichert werden, wobei das zumindest eine Register durch die Medienzugriffssteuerungskomponente und/oder eine andere Komponente des Systems über die erste Schnittstelle auslesbar ist. In einem der Register wird zum Beispiel die lokale Uhrzeit des Kommunikationsknotens gespeichert, die mit einer Master-Zeit (der so genannten Grandmaster-Clock) synchronisiert ist.

Die erste Schnittstelle, über die Daten zwischen der Medienzugriffssteuerungskomponente und der physikalischen Schnittstelle innerhalb des Kommunikationsknotens ausgetauscht werden ist zweckmäßigerweise das *Media Independent Interface* (MII).

Gemäß einer weiteren zweckmäßigen Ausgestaltung ist die Echtzeit-Uhrensynchronisationseinheit als Master-Knoten oder als Slave-Knoten konfigurierbar, indem im Betrieb des Kommunikationsknotens in einem vorgegebenen Register eine vorgegebene Information eingespeichert wird, die durch die Medienzugriffssteuerungskomponente und/oder eine andere Komponente des Systems über die erste Schnittstelle auslesbar ist. Hierdurch wird, ohne eine Kommunikation mit der Medienzugriffssteuerungskomponente oder einer anderen Komponente des Systems zu erfordern, die Zeitsynchronisation zwischen den Knoten des paketvermittelten Datennetzwerks ermöglicht.

Gemäß einer weiteren Ausgestaltung kann die physikalische Schnittstelle eine Vorrichtung zum Kodieren und/oder Dekodieren von Audiodaten, insbesondere gemäß der Spezifikation IEEE 1722 Transport, umfassen. Diese Vorrichtung (Codec) ermöglicht es, Audiodaten von einem anderen Kommunikationsknoten zu streamen und zu dekodieren, so dass die entsprechenden Daten ohne weitere Verarbeitung wahlweise von einer Komponente des integrierten Schaltkreises oder einer anderen, externen Audio-Komponente verarbeitet werden kann. Eine solche Komponente kann beispielsweise eine Soundkarte innerhalb des integrierten Schaltkreises des Kommunikationsknotens oder ein anderes, externes Audio-Endgerät (zum Beispiel MP3-Player) sein.

Die Vorrichtung zum Kodieren und/oder Dekodieren von Audiodaten kann gemäß einer weiteren Ausgestaltung über eine zweite Schnittstelle mit dem System oder mit einer externen Audio-Komponente zum direkten Austausch von Daten gekoppelt werden. Insbesondere kann die zweite Schnittstelle eine serielle Audio-Schnittstelle sein, wie zum Beispiel I²S.

Gemäß einer weiteren Ausgestaltung ist die Warteschlangenverwaltungseinheit dazu eingerichtet, den Leaky-Bucket-Algorithmus durchzuführen. Insbesondere werden durch die Warteschlangenverwaltungseinheit beim Vorhandensein der optionalen zweiten Schnittstelle die über die zweite Schnittstelle und von der ersten Schnittstelle empfangenen Daten gemäß dem angewandten Algorithmus verarbeitet. Durch das vorsehen der zweiten Schnittstelle zur Übertragung von Audio-Daten kann zudem die Bandbreite über die erste Schnittstelle weiter erhöht werden. Da das Verwalten der Warteschlange erfindungsgemäß nicht mehr in dem integrierten Schaltkreis (SoC), sondern in der physikalischen Schnittstelle durchgeführt wird, wird die Rechenlast für den integrierten Schaltkreis, insbesondere für die Medienzugriffssteuerungskomponente, beträchtlich gesenkt. Die eingesparte Rechenleistung kann durch den integrierten Schaltkreis daher für andere Aufgaben bereitgestellt werden.

Zur Lösung der Aufgabe wird ferner ein Verfahren zum Betreiben eines Kommunikationsknotens für ein paketvermitteltes Datennetzwerk vorgeschlagen, wobei der Kommunikationsknoten gemäß der oben ausgeführten der Beschreibung ausgebildet ist. Bei dem erfindungsgemäßen Verfahren führt ausschließlich die in der physikalischen Schnittstelle angeordnete Echtzeit-Uhrensynchronisationseinheit eine, insbesondere eigenständige, Zeitsynchronisation mit weiteren Kommunikationsknoten des Datennetzwerks sowie eine Messung von Laufzeitverzögerungen und/oder Übertragung von Informationen für eine Zeitsynchronisation und/oder Auswahl eines der Kommunikationsknoten des Datennetzwerks als Master-Knoten durch.

Mit dem erfindungsgemäßen Verfahren sind die gleichen Vorteile verbunden, wie diese vorstehend in Verbindung mit dem erfindungsgemäßen Kommunikationsknoten beschrieben wurden.

Unter dem Begriff "ausschließlich" ist zu verstehen, dass zur Durchführung der genannten Funktionen und Aufgaben die Medienzugriffssteuerungskomponente oder der integrierte Schaltkreis bzw. eine Komponente des integrierten Schaltkreises nicht in diese involviert sind. Insbesondere erfolgt keine Kommunikation zwischen der physikalischen Schnittstelle und dem integrierten Schaltkreis zur Erfüllung der genannten Aufgaben.

Gemäß einer weiteren Ausbildung des vorgeschlagenen Verfahrens gibt die Warteschlangenverwaltungseinheit Datenpakete, die von der ersten und der zweiten Schnittstelle von dem System oder, optional, von der externen Audio-Komponente empfangen werden, nach bestimmten Kriterien an die Kommunikationsleitung des Datennetzwerks zum Senden aus.

Gemäß einer weiteren Ausbildung des erfindungsgemäßen Verfahrens speichert die Echtzeit-Uhrensynchronisationseinheit eine oder mehrere Zeitinformationen in ein oder ein jeweiliges Register ein, um die eine oder die mehreren Zeitinformationen der Medienzugriffssteuerungskomponente und/oder der einen anderen Komponente des Systems über die erste Schnittstelle durch einen lesenden Zugriff auf das oder die Register zur Verarbeitung bereitzustellen.

In einer weiteren Ausbildung des erfindungsgemäßen Verfahrens schreibt die Echtzeit-Uhrensynchronisationseinheit eine vorgegebene Information in ein vorgegebenes Register, wobei die vorgegebene Information angibt, ob der Kommunikationsknoten als Master-Knoten oder als Slave-Knoten konfiguriert ist, wobei das vorgegebene Register durch einen lesenden Zugriff durch die Medienzugriffssteuerungskomponente und/oder eine andere Komponente des Systems über die erste Schnittstelle auslesbar ist.

Die Erfindung wird nachfolgend näher anhand von Ausführungsbeispielen in der Zeichnung beschrieben. Es zeigen:
- Fig. 1: eine schematische Darstellung eines paketvermittelten Datennetzwerks mit mehreren Kommunikationsknoten, wobei einer der Kommunikationsknoten in herkömmlicher Weise zur Durchführung von AVB ausgebildet ist;
- Fig. 2: eine schematische Darstellung eines AVB-Software-Stacks;
- Fig. 3: eine schematische Darstellung eines paketvermittelten Datennetzwerks mit einem erfindungsgemäß ausgebildeten Kommunikationsknoten gemäß einer ersten Ausgestaltungsvariante; und
- Fig. 4: eine schematische Darstellung eines paketvermittelten Datennetzwerks mit einem erfindungsgemäß ausgebildeten Kommunikationsknoten gemäß einer zweiten Ausgestaltungsvariante.

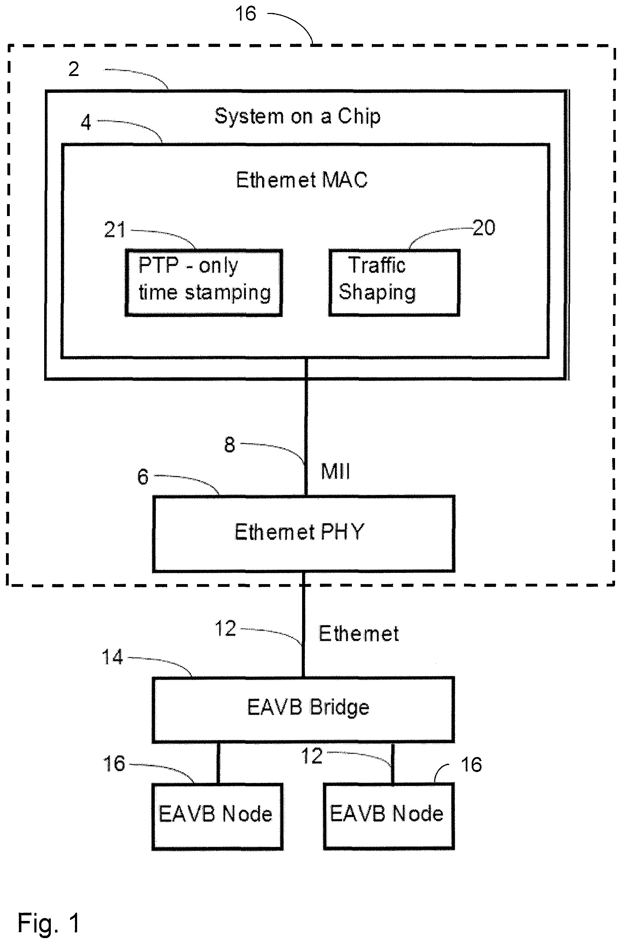

Fig. 1 zeigt eine schematische Darstellung eines paketvermittelten Datennetzwerks mit mehreren Kommunikationsknoten 16. Im Ausführungsbeispiel basiert das Datennetzwerk auf Ethernet. Die Kommunikationsknoten 16, auch als Ethernet AVB- oder EAVB-Knoten ("EAVB Node") bekannt, sind über Leitungen 12 an eine Ethernet AVB Bridge ("EAVB Bridge") 14 angeschlossen. In diesem Beispiel sind drei Kommunikationsknoten 16 gezeigt. Die Anzahl kann in der Praxis auch anders, insbesondere größer sein. Die Leitungen 12 stehen stellvertretend für leitungsgebundene oder drahtlose Kommunikationskanäle. Die Kommunikationsknoten 16 des paketvermittelten Datennetzwerks sind in diesem Beispiel zur Durchführung von AVB ausgebildet. Der Einfachheit halber sind die hierfür erforderlichen Komponenten lediglich für einen der Kommunikationsknoten 16 dargestellt. Es können auch Kommunikationsknoten 16, die nicht zur Durchführung von AVB ausgebildet sind, an die EAVB-Bridge 14 angeschlossen sein.

Der Kommunikationsknoten 16 umfasst einen integrierten Schaltkreis 2 in Gestalt eines SoC ("System on a Chip"), und eine physikalische Schnittstelle 6 in Gestalt einer Ethernet-PHY. Der integrierte Schaltkreis 2 und die physikalische Schnittstelle 6 sind über eine interne, erste Schnittstelle 8 in Gestalt einer MII ("Media Independent Interface") zum Austausch von Daten innerhalb des Kommunikationsknotens 16 verbunden.

Der integrierte Schaltkreis 2 umfasst elektronische Komponenten auf einem gemeinsamen Chip, wie zum Beispiel digitale Komponenten, analoge Komponenten, mixedsignal Komponenten und Funktionen zum Senden und Empfangen von Daten (RF (Radio Frequency)-Funktionen). Im Umfeld von mobilen Endgeräten oder Konsumgüter-Elektronik ist der integrierte Schaltkreis 2 typischerweise ein eingebettetes System (englisch: Embedded System).

Es ist zu beachten, dass in der vorliegenden Beschreibung ein SoC lediglich ein Beispiel für einen integrierten Schaltkreis ist. Im Umfeld von Desktop-Rechnern ist analog eine CPU mit einem Ethernet-over-PCI verbunden.

Der integrierte Schaltkreis 2 des Kommunikationsknotens 16 umfasst eine Medienzugriffssteuerungskomponente 4 (Ethernet-MAC). In der Medienzugriffssteuerungskomponente 4 ist zur Realisierung von AVB eine in Hardware realisierte Vorrichtung 21 vorgesehen, welche dazu dient, von dem Kommunikationsknoten 16 empfangene Datenpakete oder von dem Kommunikationsknoten 16 an einen der anderen schematisch dargestellten Kommunikationsknoten 16 zu sendende Datenpakete mit einem jeweiligen Zeitstempel zu versehen. Diese Funktionalität wird als "PTP-Only Time Stamping" bezeichnet. Die restlichen Funktionalitäten von IEEE 802.1AS (gPTP) sind in Software realisiert, welche ebenfalls auf der Medienzugriffssteuerungskomponente 4 ablaufen. Dies sind beispielsweise Funktionalitäten zur Implementierung einer Messung von Laufzeitverzögerungen und/oder der Übertragung von Informationen für eine Zeitsynchronisation und/oder der Auswahl eines der Kommunikationsknoten des Datennetzwerks als Master-Knoten.

Zudem ist in der Medienzugriffssteuerungskomponente 4 eine Warteschlangenverwaltungseinheit 20 ("Traffic Shaping") vorgesehen, welche von dem Kommunikationsknoten 16 zu einem der weiteren Kommunikationsknoten 16 zu sendende Datenpakete nach bestimmten Kriterien verzögert oder verwirft, um vorgegebenen Anforderungsprofilen zu genügen. Ein häufig zur Anwendung kommender Algorithmus ist der Leaky-Bucket-Algorithmus.

Die Medienzugriffssteuerungskomponente 4 ist allgemein eine Komponente welche die MAC (Medium Access Controller) Sub-Layer der Schicht 2 (Layer 2) implementiert. Die Medienzugriffssteuerungskomponente 4 ist typischerweise als Teil des integrierten Schaltkreises 2 ausgebildet und über einen internen Systembus (nicht dargestellt) mit anderen Komponenten des integrierten Schaltkreises zum Austausch von Daten verbunden. Im Falle einer CPU ist die Medienzugriffssteuerungskomponente 4 häufig in einer Erweiterungskarte (zum Beispiel PCI-Karte) realisiert.

Die Medienzugriffssteuerungskomponente 4 ist über die erste, interne Schnittstelle 8 (MII) mit der physikalischen Schnittstelle 6 verbunden. Die physikalische Schnittstelle 6 wird häufig auch als PHYceiver bezeichnet. Dies ist eine Komponente, welche auf der physikalischen Schicht arbeitet. Die Schnittstelle implementiert beispielsweise 1000Base-T, 100Base-T, usw.

Die erste, interne Schnittstelle 8 ist eine standardisierte Schnittstelle, welche zur Verbindung der Medienzugriffssteuerungskomponente 4 mit der physikalischen Schnittstelle 6 verbunden wird. Dabei kommen in der Praxis verschiedene Varianten zum Einsatz, wie zum Beispiel in RGMII (*Reduced Gigabit Media Independent Interface*) und SGMII (*Serial Gigabit Media Independent Interface*).

Wenn in der vorliegenden Beschreibung von Ethernet die Rede ist, so bezieht sich dies auf die physikalische Schicht. Die Übertragung kann über ein Koaxialkabel, ein Twisted-pair-Kabel oder ein Fiber-optisches Kabel erfolgen. Die Geschwindigkeiten können zwischen 10 Mb/s bis 100 Gb/s variieren. Der Protokoll-Stack von Ethernet arbeitet in einer ähnlichen Weise wie andere physikalische Schichten, wobei eine Definition im OSI-Schichtenmodell (ISO/IEC 7498-1) angegeben ist.

Die EAVB-Bridge 14 verbindet eine Vielzahl von Kommunikationsknoten 16 miteinander. Die EAVB-Bridge 14 arbeitet hierbei ähnlich den bekannten Ethernet-Switches (Schalter). Darüber hinaus unterstützt die EAVB-Bridge 14 zusätzliche AVB-Merkmale, wie zum Beispiel PTP, Warteschlangenverarbeitung ("Traffic Shaping) und Stream-Reservierung.

Jeder der Kommunikationsknoten 16 kann innerhalb des Datennetzwerks als Streaming-Quelle (englisch: AVB-Talker) oder Streaming-Senke (englisch: AVB-Listener) fungieren. Wie beschrieben, sind der integrierte Schaltkreis 2 und die physikalische Schnittstelle 6 als eingebettetes System (englisch: Embedded System) ausgebildet.

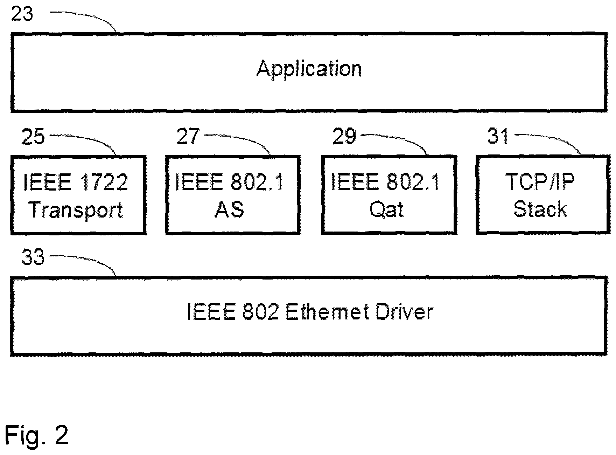

Ein wie in Fig. 1 beschriebener AVB-Kommunikationsknoten 16 umfasst ferner einen Software-AVB-Stack. Dieser ist schematisch in Fig. 2 dargestellt. Mit dem Bezugszeichen 23 ist eine Anwendung ("Application") dargestellt. Im Kontext von AVB stellt die Anwendung 23 eine Streaming-Anwendung dar, wahlweise als Quelle oder Senke (Talker oder Listener). Das Bezugszeichen 33 kennzeichnet einen Ethernet-Treiber gemäß dem Standard IEEE 802 ("IEEE 802 Ethernet Driver"). Der Treiber 33 stellt einen Treiber der Medienzugriffssteuerungskomponente 4 dar. Dieser schreibt typischerweise Ethernet-Datenpakete vom TCP/IP-Stapel 31 ("TCP/IP-Stack") in einen Speicher der Medienzugriffssteuerungskomponente 4, und umgekehrt. Im Falle eines AVB-Protokolls wird der Treiber 33 direkt adressiert, da alle AVB-Protokolle auf Schicht 2 laufen.

Das Bezugszeichen 25 ("IEEE 1722 Transport") bezeichnet eine in dem integrierten Schaltkreis 2, typischerweise außerhalb der Medienzugriffssteuerungskomponente 4, angeordnete Komponenten, welche verantwortlich für die Integration der gemäß IEEE 1722 verwirklichten Transportschicht in die vorliegende Systemarchitektur ist. Dies ist beispielsweise ein ALSA-Sound-Treiber, der Wiedergabe und Aufnahme unter dem Betriebssystem Linux unterstützt.

Mit dem Bezugszeichen 27 ("IEEE 802.1AS") wird eine Softwarekomponente bezeichnet, die für die Implementierung einer Messung von Laufzeitverzögerungen, der Übertragung von Informationen für eine Zeitsynchronisation und der Auswahl eines der Kommunikationsknoten des Datennetzwerks als Master-Knoten ist. Diese Softwarekomponente ist typischerweise in dem integrierten Schaltkreis 2 und außerhalb der Medienzugriffssteuerungskomponente 4 angeordnet.

Mit dem Bezugszeichen 29 ("IEEE 802.1Qat") wird ein Stream-Registrierungsprotokoll bezeichnet, das drei unterschiedliche Signalprotokolle, nämlich MMRP, MVRP und MSRP, nutzt, um eine Stream-Reservierung in dem Datennetzwerk mit einer EAVB-Bridge zu verwirklichen. Die Softwarekomponente 29, welche keine Echtzeitanforderungen hat, ist typischerweise in dem integrierten Schaltkreis 2 und außerhalb der Medienzugriffssteuerungskomponente 4 angeordnet. MSRP ("Multiple Stream Registration Protocol") ist ein Signalprotokoll, das Endknoten in die Lage versetzt, Ressourcen des Datennetzwerks zu reservieren, so dass die Übertragung und der Empfang von Datenströmen über das gesamte Datennetzwerk mit einer angeforderten Qualität (englisch: Quality of Service, QoS) ermöglicht wird.

Mit dem Bezugszeichen 31 ("TCP/IP") ist ein Satz von in TCP/IP-Protokollen gekennzeichnet. Dies können beispielsweise IP, ARP, ICMP, UDP, TCP, IGMP sein. Der TCP/IP-Stack ist üblicherweise für das Betriebssystem reserviert. Er ist, ebenso wie der Treiber 33, aus Sicht des in OSI-Schichten Modells oberhalb der Medienzugriffssteuerungskomponente 4 in dem integrierten Schaltkreis 2 angeordnet.

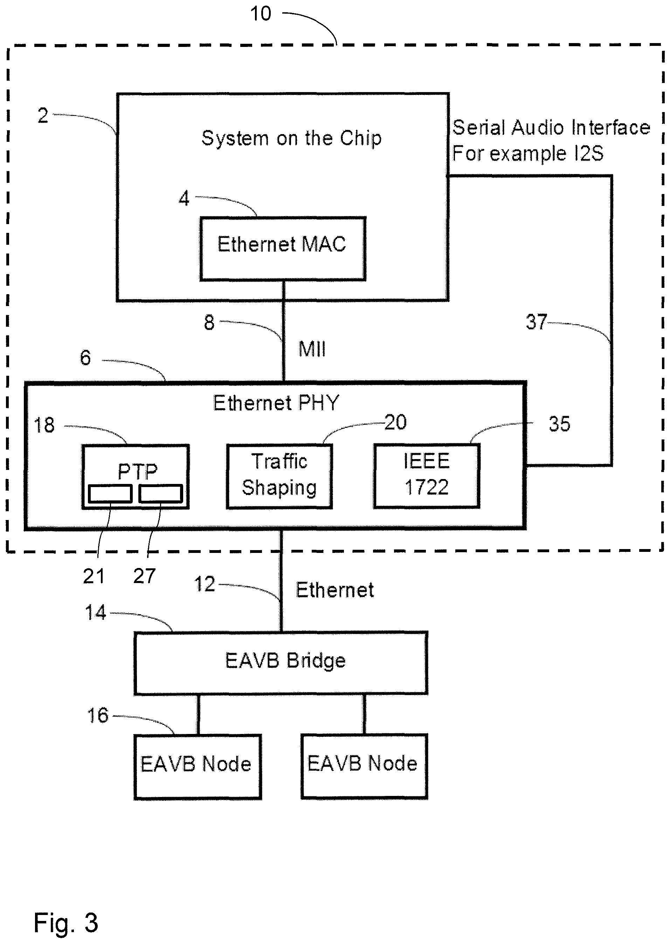

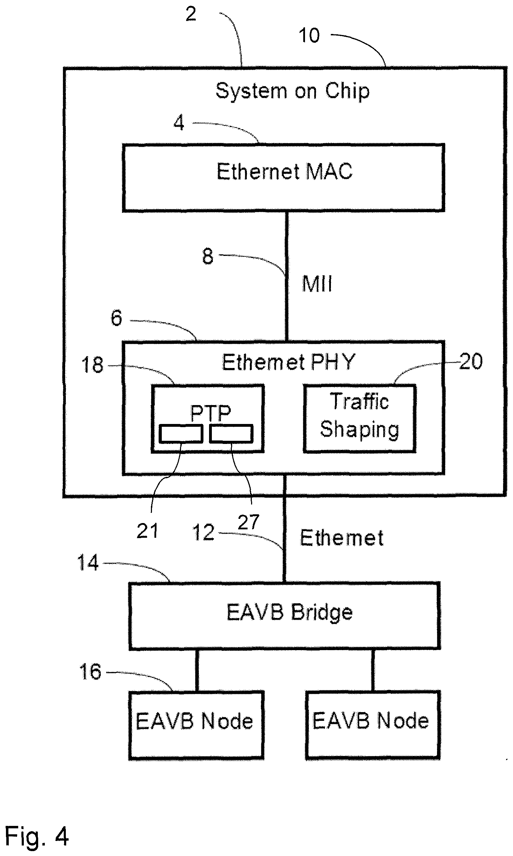

Durch die in den nachfolgenden Ausführungsbeispielen gemäß Fig. 3 und 4 beschriebenen Varianten kann der integrierte Schaltkreis 2 (SoC) von jeglichen Echtzeit-Anforderungen, die durch AVB eingebracht werden, befreit werden. Das Bezugszeichen 10 kennzeichnet im Gegensatz zu den weiteren Kommunikationsknoten 16 einen erfindungsgemäß ausgebildeten Kommunikationsknoten (EAVB-Knoten). Hierzu sind erfindungsgemäß die Echtzeit-Uhrensynchronisationseinheit 21 zusammen mit der dazugehörigen, in Software gesteuerten Funktionalität (Bezugszeichen 27 gemäß Fig. 2) und die Warteschlangenverwaltungseinheit 20 vollständig in der physikalischen Schnittstelle 6 angeordnet. Dies ermöglicht es, AVB in den Kommunikationsknoten zu integrieren, ohne den integrierten Schaltkreis 2 modifizieren zu müssen. Hierdurch kann die Rückwärtskompatibilität zu Nicht-AVB-konformen Kommunikationsknoten hergestellt werden. Ein Vorteil besteht darin, dass Interrupt-Anforderungen durch AVB an den integrierten Schaltkreis 2 gering sind. Beim Ablauf von AVB-Anwendungen wird der integrierte Schaltkreis 2 ebenso wesentlich weniger belastet, da die PTP-Zeitsynchronisation sowie die Warteschlangenverwaltung durch die physikalische Schnittstelle 6 übernommen werden. Gleiches gilt auch für die Handhabung von Daten Paketen gemäß dem Standard IEEE 1722, sofern die entsprechende Funktionalität optional ebenfalls in der physikalischen Schnittstelle 6 vorgesehen ist.

Es versteht sich, dass die diesbezüglichen AVB-Softwarefunktionalitäten aus dem in Fig. 2 gezeigten Software-Stack des integrierten Schaltkreises 2 entfernt werden können. Dies betrifft insbesondere die mit den Bezugszeichen 25, 27 und 29 in Fig. 2 gekennzeichneten Softwarekomponenten. Ebenso ist klar, dass die in Fig. 1 mit dem Bezugszeichen 20 und 21 gekennzeichneten Hardware-Komponenten nicht mehr in dem integrierten Schaltkreis 2 enthalten sind. Der in Fig. 3 gezeigte integrierte Schaltkreis 2 unterstützt in erfindungsgemäßer Weise kein AVB-Merkmal, das heißt, weder eine Warteschlangenverwaltung noch das Einfügen von Zeitstempeln in Datenpakete. Wie beschrieben, sind diese Funktionalitäten direkt in der physikalischen Schnittstelle 6 implementiert.

Die erfindungsgemäß ausgebildete Echtzeit-Uhrensynchronisationseinheit 18 innerhalb der physikalischen Schnittstelle 6 ist verantwortlich für die Zeitsynchronisation mit den anderen Kommunikationsknoten 16. Die anderen Kommunikationsknoten 16 können in erfindungsgemäßer oder herkömmlicher Weise ausgebildet sein. Die Synchronisation erfolgt gemäß dem Standard IEEE 802.1AS in folgender Weise: einer der Kommunikationsknoten 10, 16, der Grandmaster-Knoten ist, sendet Informationen, welche eine synchronisiertes Zeit umfassen, an alle anderen Kommunikationsknoten 10, 16 des Datennetzwerks. Jeder dieser (AVB-) Kommunikationsknoten muss die empfangene Zeit des Grandmaster-Knotens korrigieren, indem eine Ausbreitungszeit berücksichtigt wird, die das empfangene Datenpaket von dem Grandmaster-Knoten zu dem eigenen Kommunikationsknoten zu berücksichtigen. Um diese zu ermitteln, wird eine Übermittlungsverzögerung (englisch: forwarding delay) und eine Übertragungszeit benötigt. Die Weiterleitungsverzögerung ist die Zeit, die wie EAVB-Bridge 14 zum Verarbeiten des betreffenden Datenpakets benötigt. Die EAVB-Bridges 14 können diese Zeit (auch Residenzzeit, englisch: residence time) selbst ermitteln.

Die Echtzeit-Uhrensynchronisationseinheit 18 ist für die Ermittlung der Laufzeitverzögerung verantwortlich. Ein entsprechendes Ergebnis wird in einem Register (nicht dargestellt) der physikalischen Schnittstelle 6 gespeichert. Der integrierte Schaltkreis 10 oder eine seiner Komponenten kann diese Zeit aus dem Register der physikalischen Schnittstelle 6 durch einen lesenden Zugriff über die erste Schnittstelle 8 für die weitere Verarbeitung auslesen. Hierzu kann beispielsweise MDIO, d.h. eine bestimmte Schnittstelle namens PHY Management Interface, als Teil der MII verwendet werden. Das Einfügen des Zeitstempels in eine PTP-Nachricht wird direkt durch die Echtzeit-Uhrensynchronisationseinheit 18 erledigt. Die Echtzeit-Uhrensynchronisationseinheit 18 verfügt darüber hinaus über ein Register für eine lokale Uhrenzeit, welche mit der Grandmaster-Clock synchronisiert ist.

Durch eine vorgegebene Information in einem weiteren Register der physikalischen Schnittstelle 6 kann die Echtzeit-Uhrensynchronisationseinheit 18 als Master oder Slave konfiguriert werden.

Alle PTP-Nachrichten werden an die Medienzugriffssteuerungskomponente 4 weiter geleitet. Dies ist zum Beispiel erforderlich, damit Algorithmen, welche nicht-Echtzeit-sensitiv sind, ablaufen können.

Ist, wie dies in den Ausführungsbeispielen gemäß Fig. 3 und 4 gezeigt ist, die Vorrichtung 35 zum Kodieren und/oder Dekodieren von Audio- und/oder Videodaten gemäß in IEEE 1722 vorgesehen, so verfügt der Kommunikationsknoten 10 über eine zweite, interne Schnittstelle 37 zur Übertragung von seriellen Audio- Daten. Die Schnittstelle kann beispielsweise I²S sein. Ein Vorteil dieser Vorgehensweise besteht darin, dass die Kodierung oder Dekodierung von Audio-Daten in diesem Falle direkt in der physikalischen Schnittstelle 6 erfolgen kann und der integrierte Schaltkreis 2 von dieser Rechenlast befreit ist. Da zudem die Übertragung der Audio-Daten über die zweite Schnittstelle 37 erfolgt, wobei diese im Falle des integrierten Schaltkreises 2 mit einer darin enthaltenen Sound-Karte verbunden ist, steht über die erste Schnittstelle 8 eine hohe Bandbreite für die Übertragung von Nutzdaten zur Verfügung.

Die bei einem erfindungsgemäßen Kommunikationsknoten 10 vorgesehene erste Schnittstelle 8 (MII) umfasst alle gängigen und möglichen Varianten und zukünftige Erweiterungen, wie zum Beispiel Reduced Media Independent Interface, Gigabit Media Independent Interface, Reduced Gigabit Media Independent Interface, Serial Gigabit Media Independent Interface, 10 Gigabit Media Independent Interface, XAUI, GBIC, SFP, SFF, XFP und XFI.

Das in Fig. 4 gezeigte Ausführungsbeispiel unterscheidet sich von dem in Fig. 3 gezeigten Ausführungsbeispiel dadurch, dass auch die physikalische Schnittstelle 6 in den integrierten Schaltkreis 2 integriert ist. Aus funktionaler Sicht sind keine Unterschiede gegeben.

Eine Warteschlangenbehandlung von Datenpaketen gemäß IEEE 1722, d.h. von der Vorrichtung 35 zum Kodieren und/oder Dekodieren auszusendende Audio- und/oder Videodaten, werden ebenso wie über die erste Schnittstelle 8 von der Medienzugriffssteuerungskomponente 4 empfangenen Datenpakete von der Warteschlangenverwaltungseinheit 20 verarbeitet, um bestimmten Anforderungsprofilen an den Datenfluss zu genügen. Auch die Warteschlangenverwaltungseinheit 20 verfügt über ein oder mehrere Register, um Konfigurationen für den Warteschlangenfluss vornehmen zu können. Die Warteschlangenverwaltungseinheit 20 wird vorzugsweise in Hardware realisiert.

### Bezugszeichenliste

- 2: integrierter Schaltkreis (System-on-a-Chip (SoC))
- 4: Medienzugriffssteuerungskomponente (Ethernet MAC)
- 6: physikalische Schnittstelle (Ethernet PHY)
- 8: erste Schnittstelle (MII - Media Independent Interface)
- 10: Kommunikationsknoten (EAVB Knoten)
- 12: Ethernet-Leitung
- 14: EAVB-Bridge (Ethernet AVB Bridge)
- 16: weiterer Kommunikationsknoten (EAVB Node)
- 18: Echtzeit-Uhrensynchronisationseinheit
- 20: Warteschlangenverwaltungseinheit (Traffic Shaping)
- 21: Echtzeit-Uhrensynchronisationseinheit mit eingeschränkter Funktionalität
- 23: Anwendung
- 25: IEEE 1722
- 27: IEEE 802.1AS
- 29: IEEE 802.1Qat
- 31: TCP/IP
- 33: IEEE 802 Ethernet Treiber
- 35: Vorrichtung zum Kodieren und/oder Dekodieren von Audio- und/oder Videodaten (Codec)

## Patentansprüche

1. Kommunikationsknoten (10) für ein paketvermitteltes Datennetzwerk, umfassend einen integrierten Schaltkreis (2) mit einem System von elektronischen Komponenten zum Senden und/oder zum Empfangen von Audio- und/oder Videodaten, insbesondere eines Audio- und/oder Videodatenstroms, wobei als Komponenten des Systems zumindest eine Medienzugriffssteuerungskomponente (4) zur Implementierung einer Medienzugriffssteuerung und eine physikalische Schnittstelle (6) mit Sende- und Empfangsmitteln, über die der Kommunikationsknoten (1) an eine Kommunikationsleitung (12) des Datennetzwerks anschließbar ist, vorgesehen ist, wobei die Medienzugriffssteuerungskomponente (4) über eine interne erste Schnittstelle (8) mit der physikalischen Schnittstelle (6) zum Austausch von Daten verbunden ist, und wobei das System eine Echtzeit-Uhrensynchronisationseinheit (18) zur Synchronisation einer Zeitinformation mit weiteren Kommunikationsknoten (16) des Datennetzwerks und eine Warteschlangenverwaltungseinheit (20) umfasst,
**dadurch gekennzeichnet, dass**
die Echtzeit-Uhrensynchronisationseinheit (18) und die Warteschlangenverwaltungseinheit (20) vollständig in der physikalischen Schnittstelle (6) angeordnet sind.

2. Kommunikationsknoten nach Anspruch 1, **dadurch gekennzeichnet, dass** die Medienzugriffssteuerungskomponente (4) keine Funktionalität der Echtzeit-Uhrensynchronisationseinheit (18) und der Warteschlangenverwaltungseinheit (20) aufweist.

3. Kommunikationsknoten nach Anspruch 1 oder 2, **dadurch gekennzeichnet, dass** die Echtzeit-Uhrensynchronisationseinheit (18) auf dem Standard 802.1AS basiert und dessen vollständige Funktionalität implementiert hat.

4. Kommunikationsknoten nach Anspruch 3, **dadurch gekennzeichnet, dass** ein erster Teil der Funktionalität der Echtzeit-Uhrensynchronisationseinheit (18) als Hardware realisiert ist, durch die eine, insbesondere eigenständige, Zeitsynchronisation mit weiteren Kommunikationsknoten (16) des Datennetzwerks durchführbar ist.

5. Kommunikationsknoten nach Anspruch 3 oder 4, **dadurch gekennzeichnet, dass** ein zweiter Teil der Funktionalität der Echtzeit-Uhrensynchronisationseinheit (18) in Software realisiert ist zur Implementierung einer Messung von Laufzeitverzögerungen und/oder der Übertragung von Informationen für eine Zeitsynchronisation und/oder der Auswahl eines der Kommunikationsknoten (10, 16) des Datennetzwerks als Master-Knoten.

6. Kommunikationsknoten nach einem der vorhergehenden Ansprüche, **dadurch gekennzeichnet, dass** die Echtzeit-Uhrensynchronisationseinheit (18) zumindest ein Register umfasst, in das im Betrieb des Kommunikationsknotens (10) eine oder mehrere durch die Echtzeit-Uhrensynchronisationseinheit (18) ermittelte Zeitinformationen eingespeichert werden, wobei das zumindest eine Register durch die Medienzugriffssteuerungskomponente (4) und/oder eine andere Komponente des Systems über die erste Schnittstelle (8) auslesbar ist.

7. Kommunikationsknoten nach einem der vorhergehenden Ansprüche, **dadurch gekennzeichnet, dass** die erste Schnittstelle (8) das Media Independent Interface (MII) ist.

8. Kommunikationsknoten nach einem der vorhergehenden Ansprüche, **dadurch gekennzeichnet, dass** die Echtzeit-Uhrensynchronisationseinheit (18) als Master-Knoten oder als Slave-Knoten konfigurierbar ist, indem im Betrieb des Kommunikationsknotens (10) in einem vorgegebenen Register eine vorgegebene Information eingespeichert wird, die durch die Medienzugriffssteuerungskomponente (4) und/oder eine andere Komponente des Systems über die erste Schnittstelle (8) auslesbar ist.

9. Kommunikationsknoten nach einem der vorhergehenden Ansprüche, **dadurch gekennzeichnet, dass** die physikalische Schnittstelle (6) eine Vorrichtung (35) zum Kodieren und/oder Dekodieren von Audiodaten, insbesondere gemäß der Spezifikation IEEE 1722 Transport, umfasst.

10. Kommunikationsknoten nach Anspruch 8, **dadurch gekennzeichnet, dass** die Vorrichtung (35) zum Kodieren und/oder Dekodieren von Audiodaten über eine zweite Schnittstelle (37) mit dem System oder mit einer externen Audio- Komponente zum direkten Austausch von Daten gekoppelt ist.

11. Kommunikationsknoten nach einem der vorhergehenden Ansprüche, **dadurch gekennzeichnet, dass** die zweite Schnittstelle (37) eine serielle Audio- Schnittstelle, insbesondere I²S, ist.

12. Kommunikationsknoten nach einem der vorhergehenden Ansprüche, **dadurch gekennzeichnet, dass** die Warteschlangenverwaltungseinheit (20) dazu eingerichtet ist, den Leaky-Bucket-Algorithmus durchzuführen.

13. Verfahren zum Betreiben eines Kommunikationsknotens (10) für ein paketvermitteltes Datennetzwerk, wobei der Kommunikationsknoten gemäß einem der vorhergehenden Ansprüche ausgebildet ist, bei dem:
- ausschließlich die in der physikalischen Schnittstelle (6) angeordnete Echtzeit-Uhrensynchronisationseinheit (18) eine, insbesondere eigenständige, Zeitsynchronisation mit weiteren Kommunikationsknoten (16) des Datennetzwerks sowie eine Messung von Laufzeitverzögerungen und/oder Übertragung von Informationen für eine Zeitsynchronisation und/oder Auswahl eines der Kommunikationsknoten (10, 16) des Datennetzwerks als Master-Knoten durchführt.

14. Verfahren nach Anspruch 13, bei dem die Warteschlangenverwaltungseinheit (20) Datenpakete, die von der ersten und der zweiten Schnittstelle (8, 37) von dem System oder, optional, von der externen Audio- Komponente empfangen werden, nach bestimmten Kriterien an die Kommunikationsleitung (12) des Datennetzwerks zum Senden ausgibt.

15. Verfahren nach Anspruch 13 oder 14, bei dem die Echtzeit-Uhrensynchronisationseinheit (18) eine oder mehrere Zeitinformationen in ein oder ein jeweiliges Register einspeichert, um die eine oder die mehreren Zeitinformationen der Medienzugriffssteuerungskomponente (4) und/oder der einen anderen Komponente des Systems über die erste Schnittstelle (8) durch einen lesenden Zugriff auf das oder die Register zur Verarbeitung bereitzustellen.

16. Verfahren nach einem der Ansprüche 13 bis 15, bei dem die Echtzeit-Uhrensynchronisationseinheit (18) eine vorgegebene Information in ein vorgegebenes Register schreibt, wobei die vorgegebene Information angibt, ob der Kommunikationsknoten (10) als Master-Knoten oder als Slave-Knoten konfiguriert ist, wobei das vorgegebene Register durch einen lesenden Zugriff durch die Medienzugriffssteuerungskomponente (4) und/oder eine andere Komponente des Systems über die erste Schnittstelle (8) auslesbar ist.

## Claims

1. A communication node (10) for a packet-switched data network, which comprises an integrated circuit (2) with a system of electronic components for sending and/or receiving audio and/or video data, particularly of an audio and/or video data stream, wherein at least a media access control component (4) for implementing a media access control and a physical interface (6) with transmitting and receiving means, by way of which the communication node (1) is connectable to a communication line (12) of the data network, are provided as components of the system, wherein the media access control component (4) is connected via an internal first interface (8) to the physical interface (6) for exchanging data, and wherein the system comprises a real-time clock synchronization unit (18) for synchronizing time information with other communication nodes (16) of the data network as well as a queue management unit (20),
**characterized in that**
the real time clock synchronization unit (18) and the queue management unit (20) are fully arranged in the physical interface (6).

2. The communication node according to claim 1, **characterized in that** the media access control component (4) does not have any functionality of the real time clock synchronization unit (18) and of the queue management unit (20).

3. The communication node according to claim 1 or 2, **characterized in that** the real time clock synchronization unit (18) is based on the standard 802.1AS and has implemented all of its functionalities.

4. The communication node according to claim 3, **characterized in that** a first part of the functionality of the real time clock synchronization unit (18) is carried out as hardware, by which time synchronization with other communication nodes (16) of the data network is, particularly autonomously, operable.

5. The communication node according to claim 3 or 4, **characterized in that** a second part of the functionality of the real time clock synchronization unit (18) is carried out as software for implementing a measurement of propagation delays and/or the transmission of information for time synchronization and/or choosing one of the communication nodes (10, 16) of the data network as a master node.

6. The communication node according to one of the afore-mentioned claims, **characterized in that** the real-time clock synchronization unit (18) comprises at least one register, in which a single or several pieces of time information determined by the real-time clock synchronization unit (18) are stored during operation of the communication node (10), wherein the at least one register is readable via the first interface (8) by the media access control component (4) and/or by another component of the system.

7. The communication node according to one of the afore-mentioned claims, **characterized in that**, the first interface (18) is the Media Independent Interface (MII).

8. The communication node according to one of the afore-mentioned claims, **characterized in that** the real-time clock synchronization unit (18) is configurable as master node or as slave node by storing a predetermined piece of information in a predetermined register during operation of the communication node (10), the information being readable by the media access control component (4) and/or by another component of the system via the first interface (8).

9. The communication node according to one of the afore-mentioned claims, **characterized in that** the physical interface (6) comprises a device (35) for encoding and/or decoding audio data, particularly according to the specification IEEE 1722 Transport.

10. The communication node according to claim 8, **characterized in that** the device (35) for encoding and/or decoding audio data is coupled via a second interface (37) with the system or with an external audio component for directly exchanging data.

11. The communication node according to one of the afore-mentioned claims, **characterized in that** the second interface (37) is a serial audio interface, particularly I²S.

12. The communication node according to one of the afore-mentioned claims, **characterized in that** the queue management unit (20) is configured to execute the leaky bucket algorithm.

13. A method for operating a communication node (10) for a packet-switched data network, wherein the communication node is designed according to one of the afore-mentioned claims, in which
- only the real time clock synchronization unit (18) arranged in the physical interface (6) carries out a particularly autonomous time synchronization process with other communication nodes (16) of the data network as well as a measurement of propagation delays and/or transmission of information for time synchronization and/or choosing one of the communication nodes (10, 16) of the data network as a master node.

14. The method according to claim 13, wherein the queue management unit (20) outputs data packets, which are received from the first and second interface (8,37) by the system, or optionally by the external audio component, according to specific criteria, to the communication line (12) of the data network for transmission.

15. The method according to claim 13 or 14, wherein the real-time clock synchronization unit (18) stores one or several pieces of time information in a register or a respective register, in order to provide the one or several pieces of information, for processing, to the media access control component (4) and/or to the one other component of the system, by a read access to the register(s), via the first interface (8).

16. The method according to one of the claims 13 to 15, wherein the real-time synchronization unit (18) writes a predetermined piece of information into a predetermined register, wherein the predetermined piece of information indicates whether the communication node (10) is configured as a master node or as a slave node, wherein the predetermined register is readable, by a read access, by the media access control component (4) and/or another component of the system, via the first interface (8).

## Revendications

1. Noeud de communication (10) pour un réseau de données par paquets, comprenant un circuit intégré (2) avec un système de composants électroniques pour envoyer et/ou recevoir des données audio et/ou vidéo, en particulier d'un flux de données audio et/ou vidéo, où au moins un composant de commande d'accès aux supports de données (4) pour réaliser un accès aux supports de données et une interface physique (6) avec des moyens d'émission et de réception, par lesquels le noeud de communication (1) peut être relié à une ligne de communication (12), sont prévus en tant que composants du système, où le composant de commande d'accès aux supports de données (4) est relié par une première interface interne (8) avec l'interface physique (6) pour l'échange de données, et où le système comporte une unité de synchronisation d'horloges en temps réel (18) pour synchroniser une information de temps avec d'autres noeuds de communication (16) du réseau de données et une unité de gestion de files d'attente (20),
**caractérisé en ce que**
l'unité de synchronisation d'horloges en temps réel (18) et l'unité de gestion de files d'attente (20) sont intégralement disposées dans l'interface physique (6).

2. Noeud de communication selon la revendication 1, **caractérisé en ce que** la composante de contrôle d'accès aux supports de données (4) ne comporte aucune fonctionnalité de l'unité de synchronisation d'horloges en temps réel (18) et de l'unité de gestion de files d'attente (20).

3. Noeud de communication selon la revendication 1 ou 2, **caractérisé en ce que** l'unité de synchronisation d'horloges en temps réel (18) est basée sur la norme 802.1AS et met en oeuvre la totalité de ses fonctionnalités.

4. Noeud de communication selon la revendication 3, **caractérisé en ce qu'**une première partie de la fonctionnalité de l'unité de synchronisation d'horloges en temps réel (18) est réalisée par un équipement matériel par lequel une synchronisation temporelle, en particulier autonome, avec d'autres noeuds de communication (16) du réseau de données est réalisable.

5. Noeud de communication selon la revendication 3 ou 4, **caractérisé en ce qu'**une seconde partie de la fonctionnalité de l'unité de synchronisation d'horloges en temps réel (18) est réalisée par un logiciel pour mettre en oeuvre une mesure de délais de propagation et/ou une transmission d'informations pour une synchronisation temporelle et/ou la sélection d'un noeud de communication (10, 16) du réseau de données en tant que noeud maître.

6. Noeud de communication selon l'une des revendications précédentes, **caractérisé en ce que** l'unité de synchronisation d'horloges en temps réel (18) comporte au moins un registre dans lequel sont enregistrées, pendant le fonctionnement du noeud de communication (10), une ou plusieurs informations de temps déterminées par l'unité de synchronisation d'horloges en temps réel (18), où l'au moins un registre est lisible par le composant d'accès aux supports de données (4) et/ou un autre composant du système via la première interface (8).

7. Noeud de communication selon l'une des revendications précédentes, **caractérisé en ce que** la première interface (8) est l'interface indépendante du support (media independent interface - MII).

8. Noeud de communication selon l'une des revendications précédentes, **caractérisé en ce que** l'unité de synchronisation d'horloges en temps réel (18) peut être configurée en tant que noeud maître ou que noeud esclave, en enregistrant, pendant le fonctionnement du noeud de communication (10), une information prédéfinie dans un registre prédéfini, ladite information étant lisible par le composant d'accès aux supports de données (4) et/ou un autre composant du système via la première interface (8).

9. Noeud de communication selon l'une des revendications précédentes, **caractérisé en ce que** l'interface physique (6) comporte un dispositif (35) pour le codage et/ou le décodage de données audio, en particulier selon la norme IEEE 1722 Transport.

10. Noeud de communication selon la revendication 8, **caractérisé en ce que** le dispositif (35) pour le codage et/ou décodage de données audio est couplé au système ou à un composant audio externe via une second interface (37) pour l'échange direct de données.

11. Noeud de communication selon l'une des revendications précédentes, **caractérisé en ce que** la seconde interface (37) est une interface audio sérielle, en particulier I2S.

12. Noeud de communication selon l'une des revendications précédentes, **caractérisé en ce que** l'unité de gestion de files d'attente (20) est configurée pour exécuter l'algorithme du seau percé.

13. Procédé pour faire fonctionner un noeud de communication (10) pour un réseau de données par paquets, où le noeud de communication est configuré selon l'une des revendications précédentes, lors duquel :
- seule l'unité de synchronisation d'horloges en temps réel (18) disposée dans l'interface physique (6) effectue une synchronisation temporelle, en particulier autonome, avec d'autres noeuds de communication (16) du réseau de données ainsi qu'une mesure de délais de propagation et/ou une transmission d'informations pour une synchronisation temporelle et/ou une sélection de l'un des noeuds de communication (10, 16) du réseau de données en tant que noeud maître.

14. Procédé selon la revendication 13, dans lequel l'unité de gestion de files d'attente (20) émet, en fonction de critères donnés, des paquets de données reçus par la première et la seconde interface (8, 37) par le système ou, option- nellement, par le composant audio externe, à destination de la ligne de communication (12) du réseau de données.

15. Procédé selon la revendication 13 ou 14, dans lequel l'unité de synchronisation d'horloges en temps réel (18) enregistre une ou plusieurs informations de temps dans un registre ou un registre respectif, afin de mettre l'/les information(s) de temps à disposition du composant d'accès aux supports de données (4) et/ou de l'autre composant du système par accès en lecture au(x) registre(s) via la première interface (8) pour leur traitement.

16. Procédé selon l'une des revendications 13 à 15, dans lequel l'unité de synchronisation d'horloges en temps réel (18) écrit une information prédéfinie dans un registre prédéfini, où l'information prédéfinie indique si le noeud de communication (10) est configuré comme un noeud maître ou un noeud esclave, où le registre prédéfini peut être lu par accès en lecture par le composant de commande d'accès aux supports de données (4) et/ou un autre composant du système via la première interface (8).
